# EUROPEAN PATENT APPLICATION

(11) **EP 2 884 721 A1**
(43) Date of publication of application: **17.06.2015**
(21) Application number: 13828616.6
(22) Date of filing: 20.05.2013
(51) Int. Cl.: H04M 1/23

(54) **KEYBOARD AND MOUSE OF CELLULAR PHONE**

(30) Priority: 09.08.2012 CN 201210291364; 24.12.2012 CN 201220724909 U
(71) Applicant: Li, Yonggui, Qingdao Shandong 266555 (CN)
(72) Inventor: LI, Yonggui, Qingdao Shandong 266555 (CN); LI, Kun, Qingdao Shandong 266555 (CN)
(74) Representative: Brown, David Leslie
(86) International application number: PCT/CN2013/075887
(87) International publication number: WO 2014/023118

(57) **Abstract**

A keyboard and mouse of a cellular phone comprise a keyboard and a simulated mouse. The keyboard comprises a set of keyboard control keys and a main keyboard. The keyboard control keys are located on the side(s) of a device, mainly used for controlling the content inputted by the main keyboard, and operated by one hand. The main keyboard is located at the front surface of the device, mainly used for inputting characters and commands, and operated by another hand. The simulated mouse is realized by means of a screen-touching finger or a touch pen. A simulated mouse cursor appears when the simulating finger touches the simulated mouse zone on the touch screen of the device, and hides when leaving the simulated mouse zone. The simulated mouse cursor and the simulating finger keep a relatively fixed distance therebetween. The left and right buttons of the simulated mouse are simulated by a left-side finger and a right-side finger of the simulating finger. The action of the middle button of the simulated mouse is simulated by the action of two fingers sliding on the touch screen side by side. The simulated mouse buttons can also be realized by some of the keyboard control keys which are reused as the left, right and middle mouse buttons. A device with a touch pen can also simulate a mouse by cooperating with keyboard control keys and fingers.

## Description

### TECHNICAL FIELD

A keyboard and mouse solution is used for handheld digital devices (such as cellular phones, tablets, eBooks, electronic dictionaries, learning machines, and handheld control devices etc., a handheld digital device is hereinafter referred to as a device). For ease of description, cellular phones are taken as examples to explain and illustrate handheld digital devices with small size, and tablets are taken as examples to explain and illustrate handheld digital devices with large size. Due to the symmetry of one's hands, where the solution is explained and illustrated by means of left-right hands below, it can also be realized by means of right-left hands in turn. Unless it is necessary, explanation and illustration are no longer given by means of right-left hands. This cellular phone keyboard and mouse solution is hereinafter referred to as the solution.

### BACKGROUND ART

Currently, (1)There are mainly three kinds of cellular phone keyboard solutions: ①A dialing keyboard plus additional control and edit keys, the keys of which are too small to meet the increasingly powerful cellular phone applications; ② A smaller version of a PC keyboard. Because of the small size of cellular phones, the keys of this type of keyboard is too crowded to be convenient to use; ③A QWERT keyboard is a simplified version of a PC keyboard which only keep the letter keys. Even though the keys reduce in quantity, a QWERT keyboard cannot yet be compatible with cellular phones with small size, and the keys are still crowded to be inconvenient to use. (2)A tablet uses a soft QWERT keyboard basically. Even though a single key is big enough, the keys of each row can be up to 10 at most, and moreover the keyboard is not a hard one, so a user cannot position his/her fingers easily and touch type at a high speed. (3)Neither cellular phones nor tablets have a device like a mouse.

Anyway, the main technical problems of the keyboard and mouse of a handheld digital device are currently: ①A user cannot use two hands simultaneously, and the left hand does nothing in keyboard and mouse inputs except holding the device; ②The keys of the keyboard are small either in size or in quantity, or the keys of each row are too much (refers to a QWERT keyboard of a tablet), so the keyboard is only suitable for the operations by a single finger of a single hand, and not fit for touch typing at a high speed; ③There is no powerful tool like a mouse, and moreover touch operations often result in wrong actions; ④In the absence of a mouse, there is no accurate positioning tool like a mouse pointer, and many mature PC applications such as a word processing software cannot be effectively used with a handheld digital device, and some PC applications such as a senior drawing software maybe cannot be transferred to a handheld digital device forever; ⑤In the absence of appropriate control keys, no shortcuts can be used like a PC keyboard; ⑥Taking no account of the compatibility with a PC keyboard, there will be troubles in the PC applications' transference to a handheld digital device when the device developments to become a personal computing Center in the future.

### SUMMARY OF THE INVENTION

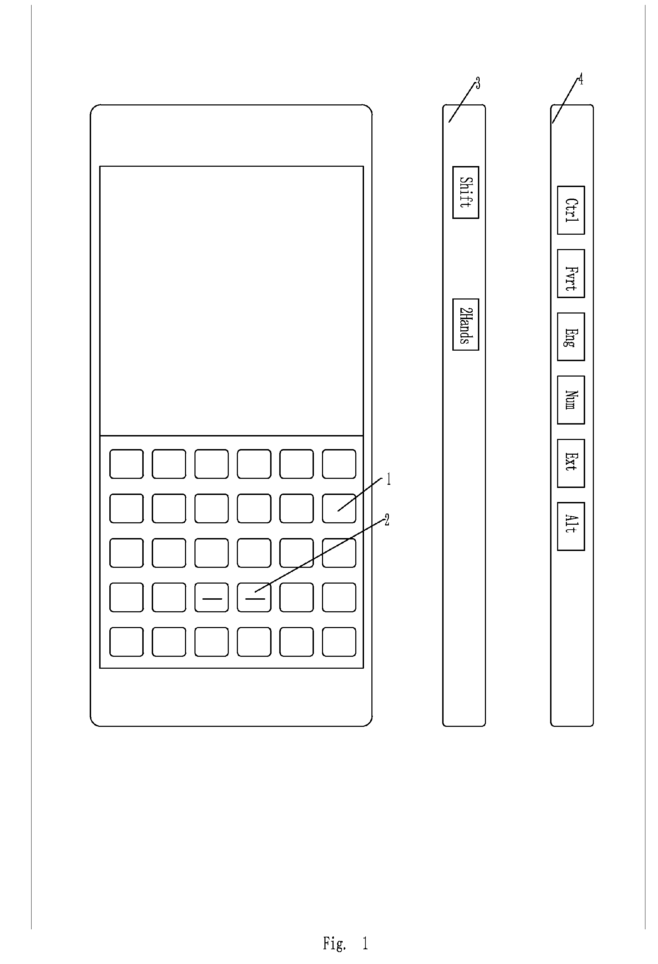

In order to solve the technical problems mentioned above, the technical solution of this invention is: (1)On the side(s) (including the back, top side and the other faces) of a handheld digital device or on the side(s) of the keyboard, we configure additional keyboard control keys (hereafter referred to as side-keys). These keys are operated by left hand. In addition to the conventional PC keyboard control keys: Shift, Ctrl and Alt, 4 new control keys named as Fvrt, Eng, Num and Ext are configured, they are shown as **3** and **4** in Fig.**1**. Fvrt is short for favorite and used to enter a user's mother tongue or the common second language of an English user. Eng is short for English and used to enter English uppercase and lowercase letters. Num is the abbreviation of number and used to enter numbers and English punctuations. Ext is the abbreviation of extension and for the extension input such as the input of the third language or the user-customized content or the vendor-defined content. These 4 new control keys expand the functionality of each single key of the main keyboard. When they are operated together with the Shift key, each key of the main keyboard can be used as 4*2=8 keys. This is just why the solution has enough keys and assures that the keys are moderate in size. In addition, a 2Hands key is configured to indicate that the operations are by two hands at the same time. (2)A main keyboard using a 6*5 key matrix is configured and is operated by right hand. The main keyboard has at least 6*5*4*2=240 kinds of possible inputs theoretically. In contrast, a PC keyboard has only about 100 kinds of inputs. In this way, the keyboard is more powerful than a PC keyboard except that the operations are of a bit more trouble than a PC keyboard. (3)A simulated mouse has 3 sets of solutions able to be used simultaneously:①Num, Eng and Fvrt are redefined and reused as the left, right and middle mouse buttons, and with the aid of a finger simulating a mouse on the touch screen, we can simulate a PC mouse completely. ②By means of multi-touch technology, we can define the fingers clicking on the touch screen at the left and right of the finger simulating the mouse respectively as the left and right mouse buttons, and define the action of two fingers sliding side by side on the touch screen as the scrolling operation of the middle mouse button. And in this way, we can simulate a mouse only by fingers touching on the touch screen. The middle mouse button can also be simulated by means of one finger sliding together with another finger touching and staying on the screen. ③With the aid of the side-keys or fingers, a touch pen can be also used to simulate a mouse.

If the side-keys are integrated into the main keyboard, the keyboard becomes a one-hand keyboard with which we still can touch-type at a high speed; On the basis of the solution, a tablet combined with a hard keyboard becomes a hard keyboard tablet; This solution can also combine a hard keyboard with a touchpad to become a portable handheld keyboard; With this solution, we can also easily convert a handheld digital device to a handheld keyboard; Finally, we can also make a cellular phone keyboard case by the combination of a hard keyboard with this solution and a cellular phone case.

The beneficial effects of the solution are very obvious: We can touch-type at a high speed with a handheld digital device; the solution realizes the function of a mouse on a touch screen; the solution also provides conveniences for the PC applications' transference to a handheld digital device.

### BRIEF DESCRIPTION OF THE DRAWINGS

Fig.**1** is a layout of the main keyboard and side-keys. **1** A 6*5 key matrix of the main keyboard. **2** A finger positioning mark. **3** A left view of a device configured with 2 side-keys: Shift and 2hands. **4** A right view of the device configured with 6 side-keys: Ctrl, Fvrt, Eng, Num, Ext and Alt.

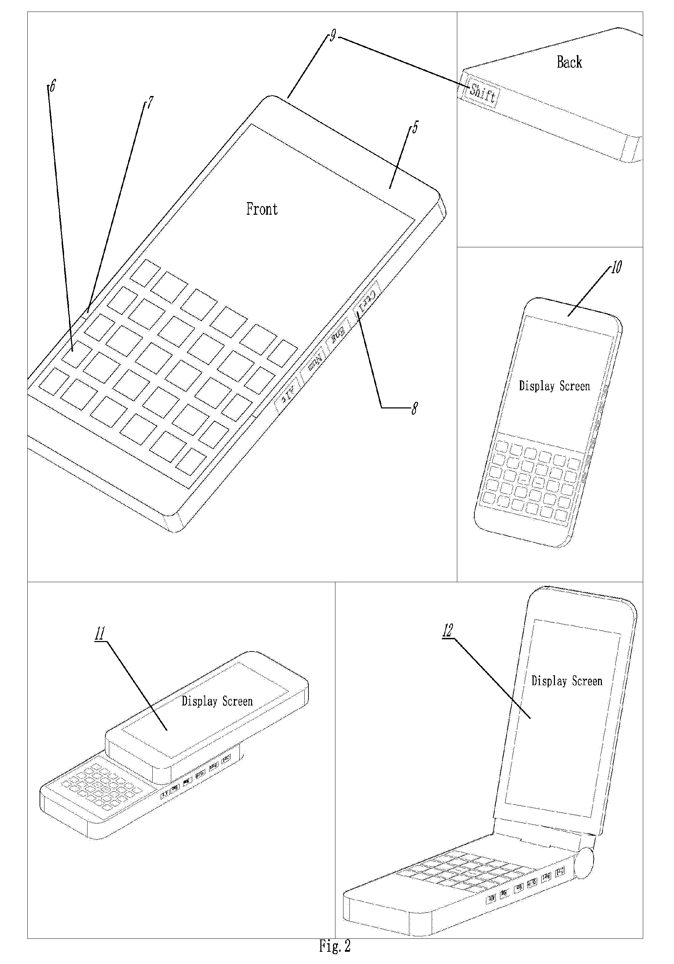

Fig.**2** gives several examples of cellular phones. Four practical models of cellular phones applying the solution are given. **5** A soft keyboard bar phone. **10** A hard keyboard bar phone. **11** A slide phone. **12** A rotatable screen flip phone. **6** The keys at the row ends are reduced in size for the reduction of the occupying area of the main keyboard. **7** A finger positioning mark. **8** Four side-keys: Ctrl, Eng, Num and Alt are configured, and Fvrt, Ext and 2hands are omitted. The total keys plus the Shift key at the left of the top side is five. **9** The Shift key is at the left of the phone's top side.

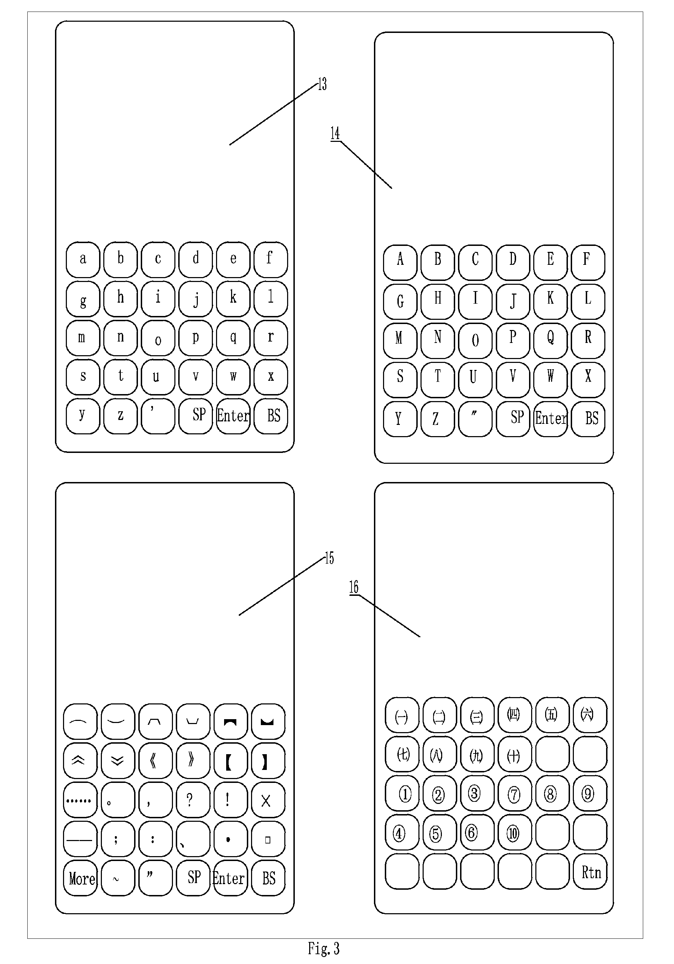

Fig.**3** is the first part of main keyboard layouts. **13** A Chinese pinyin or English a-z layout when pressing Fvrt or Eng if Chinese is the user's mother tongue. **14** An English A-Z layout when Eng+Shift are pressed. **15** A Chinese punctuation layout when pressing Fvrt+Shift. **16** A Chinese punctuation extension layout when pressing the More key in the lower left corner of layout **15**. Rtn in the lower right corner in layout **16** is short for return. The layout returns to the last one when the Rtn key is pressed after the user completes the inputs. English uppercase and lowercase letters all are of half-width.

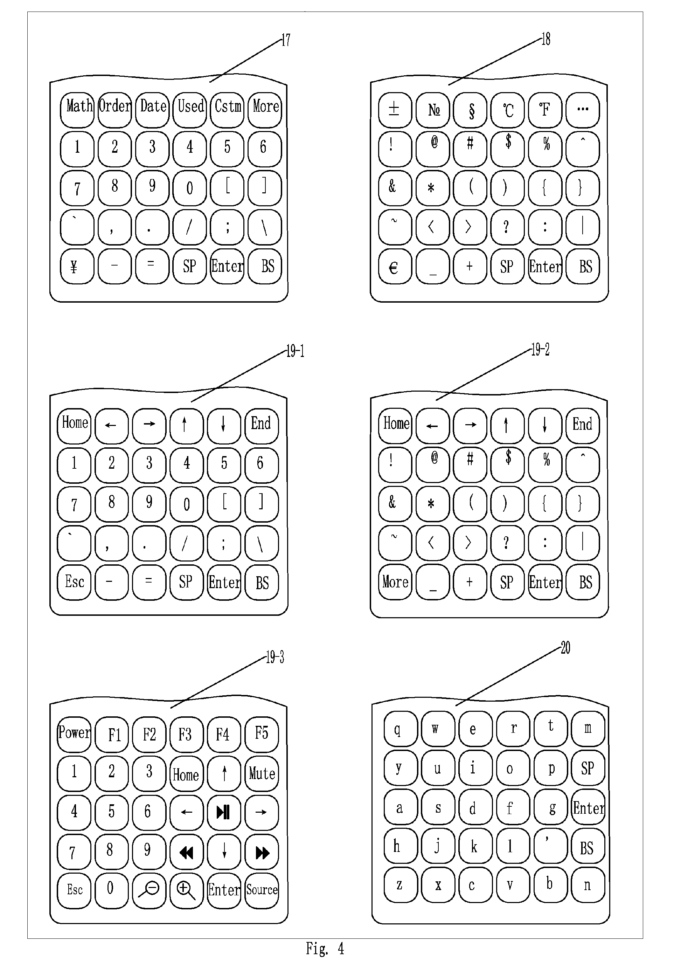

Fig.**4** includes the second part of main keyboard layouts, a remote layout and a layout imitating a QWERT keyboard. **17** A number, punctuation etc. layout when pressing Num. **18** An English punctuation etc. layout when pressing Num+Shift. Wherein the Math key in layout **17** represents math symbols, the Order key represents ordinal numbers, the Date key represents various formats of current date, the Used key represents currently used uncommon symbols, Cstm is short for custom and the Cstm key represents custom symbols, and the More key indicates that there is much more symbols. These special keys trigger a nested sub input layout or a menu. **19-1** Another number, punctuation etc. layout including arrow keys etc. when pressing Num. **19-2** Another English punctuation etc. layout corresponding to layout **19-1** when pressing Num+Shift. The numbers, English punctuations in the above layouts all are of half-width. **19-3** A remote layout suitable for TVs, projectors, disc players, set-top boxes etc. **20** The first layout imitating a QWERT keyboard with a 6*5 matrix.

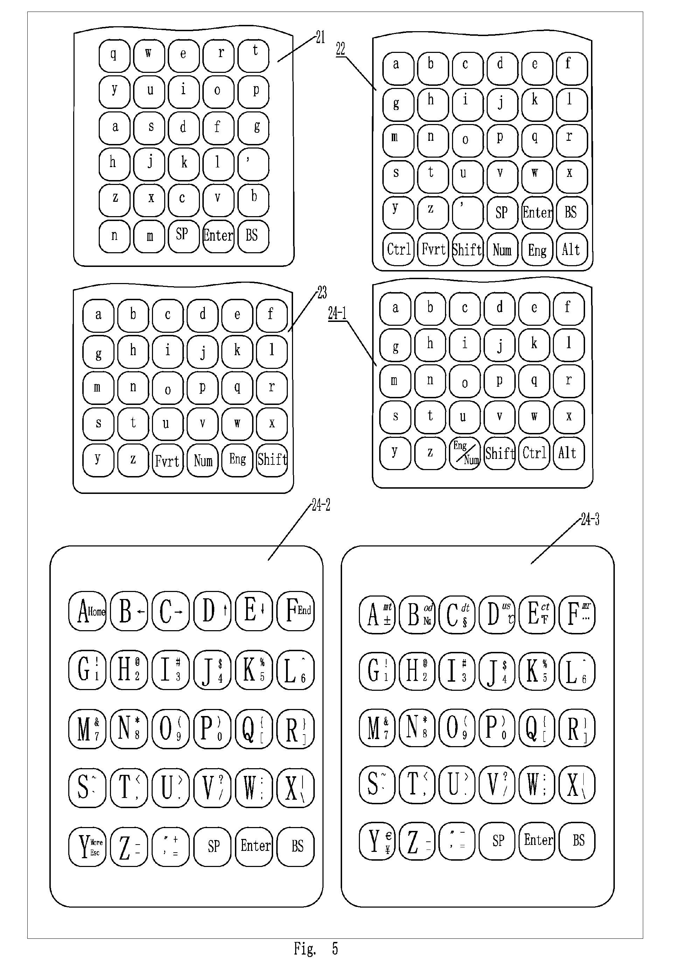

Fig.**5** includes the second layout imitating a QWERT keyboard, three one-hand keyboard layouts and two standard hard keyboard layouts. **21** The second layout imitating a QWERT keyboard with a 5*6 matrix. **22** The first one-hand keyboard layout with a 6*6 matrix. **23** The second one-hand keyboard layout with a 6*5 matrix. **24-1** The third one-hand keyboard layout with a 6*5 matrix. **24-2** The second standard hard keyboard layout. **24-3** The third standard hard keyboard layout. Wherein italic mt in the first row is short for math, od for order, dt for date, us for used, ct for custom, mr for more.

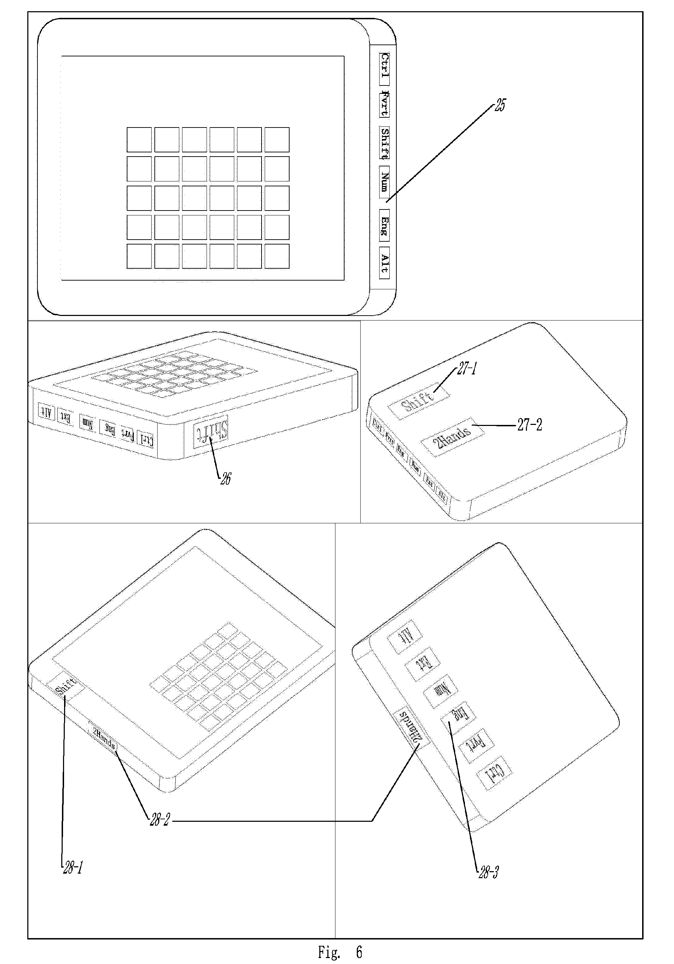

Fig.**6** gives four kinds of tablet side-key layouts, including 3 layouts at the right side and one at the left side. The 3 layouts at the right side: **25** All side-keys including Shift are on the right side without Ext and 2Hands. **26** Most of side-keys are on the right side with Shift at the right of the top side and without 2Hands. **27-1** Shift and **27-2** 2Hands are on the back and the others are on the right side. The one layout at the left side: **28-1** Shift is at the upper left corner and **28-2** 2Hands is on the left side. **28-3** The other side-keys are at the left of the tablet back.

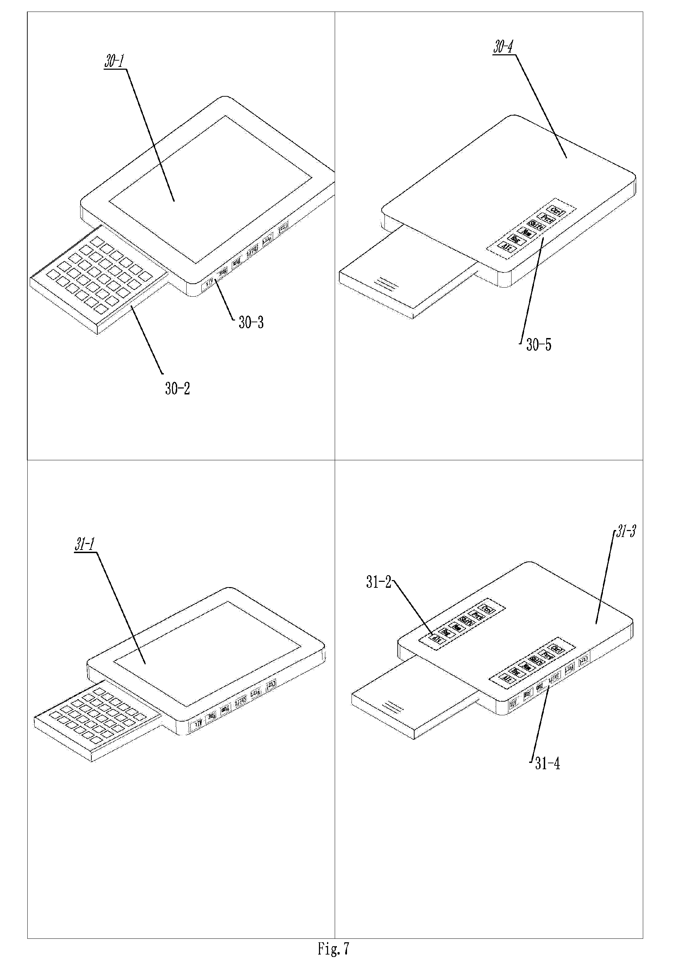

Fig.7 gives 2 kinds of hard keyboard tablet models which are different in sets of side-keys. **30-1** and **30-4** A hard keyboard tablet having 2 sets of side-keys which are realized by touchpads. A user can change the holding position of his/her left hand. **30-1** A front view. **30-4** A back view. **30-2** A hard keyboard at the bottom side of the tablet. **30-3** A touch pad used as side-keys on the right side. **30-5** Another touch pad used as side-keys at the left of the back. **31-1** and **31-3** A hard keyboard tablet having 4 sets of side-keys. A user not only can change the holding position of his/her left/right hand, but also the tablet is in common use with both a lefty and a righty. **31-1** A front view. **31-3** A back view. **31-2** A touch pad as side-keys at the right of the back. **31-4** A touch pad as side-keys on the left side.

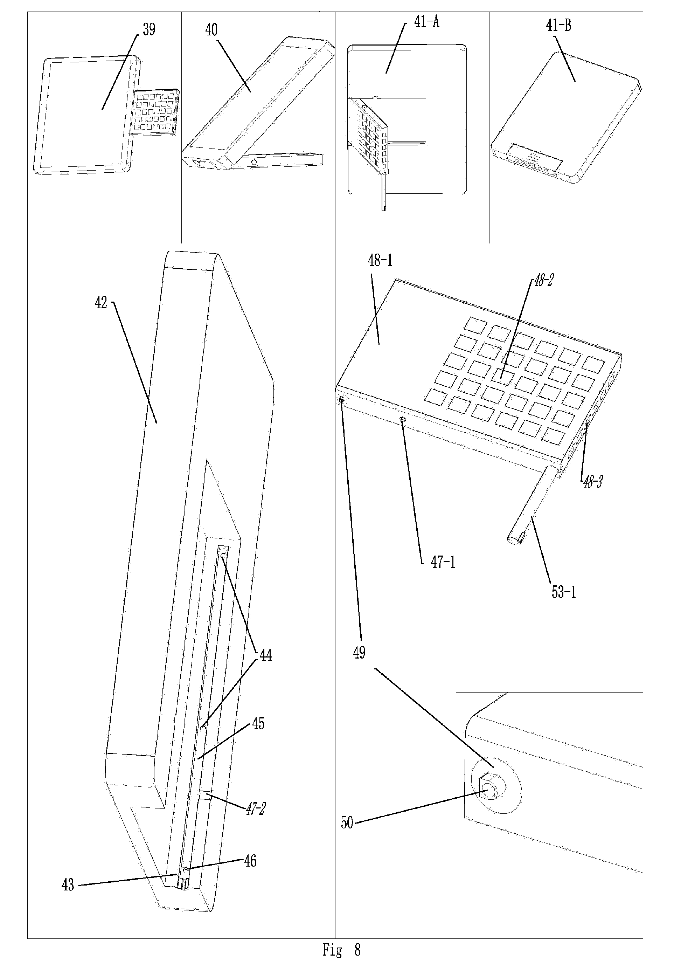

Fig.**8** gives 2 kinds of foldable hard keyboard tablets which are a little different. **41-A** A back view of a foldable hard keyboard tablet which has not a keyboard cover and is standing with the keyboard as a support and a touch pen as a support rod. **41-B** A back view of a foldable hard keyboard tablet which has a keyboard cover and the keyboard is received into the keyboard room. **39** A front view of the tablet when the hard keyboard at the right side is pulled out to allow the user to input. **40** A view of the tablet when it is standing with the keyboard pulled out and folded backward to be used as a support. **42** The tablet body. **43** A keyboard axis limit notch. **44** A keyboard limit spring ball. **45** A keyboard guide way. **46** A keyboard axis limit spring ball. **47-1** A keyboard slide rod. **47-2** A keyboard slide rod gap. **48-1** A hard Keyboard. **48-2** A keyboard matrix. **48-3** Side-keys. **49** A controlled keyboard axis with a semi-square and semi-circle head. **50** A keyboard axis limit pit. **53-1** A touch pen as a support rod.

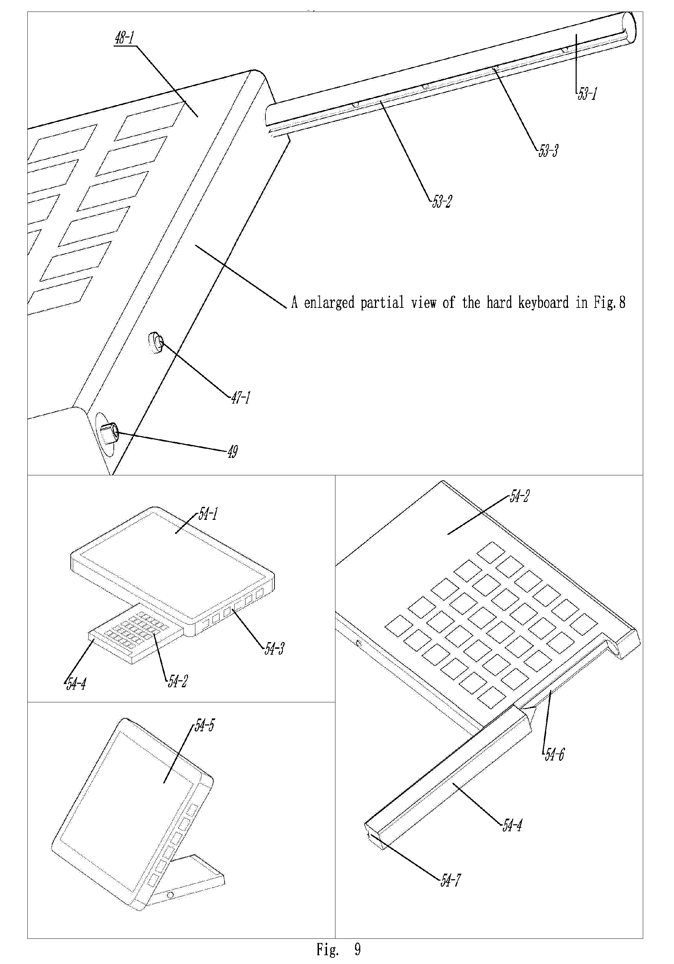

Fig.**9** includes an enlarged partial view of the hard keyboard **48-1** of Fig**.8** and another foldable hard keyboard tablet. **48-1** A hard Keyboard. **47-1** A keyboard slide rod. **49** A controlled keyboard axis with a semi-square and semi-circle head. **53-1** A touch pen. **53-2** A touch pen limit spring ball guide-way. **53-3** A touch pen limit pit. **54-1** Another foldable hard keyboard tablet. **54-2** A hard keyboard at the bottom side. **54-3** Side-keys. **54-4** A touch pen as a support rod. **54-5** A view of the tablet standing when the hard keyboard is folded backward to be used as a support. **54-6** A trapezoidal guide rail of the touch pen. **54-7** A trapezoidal guide-way of the touch pen.

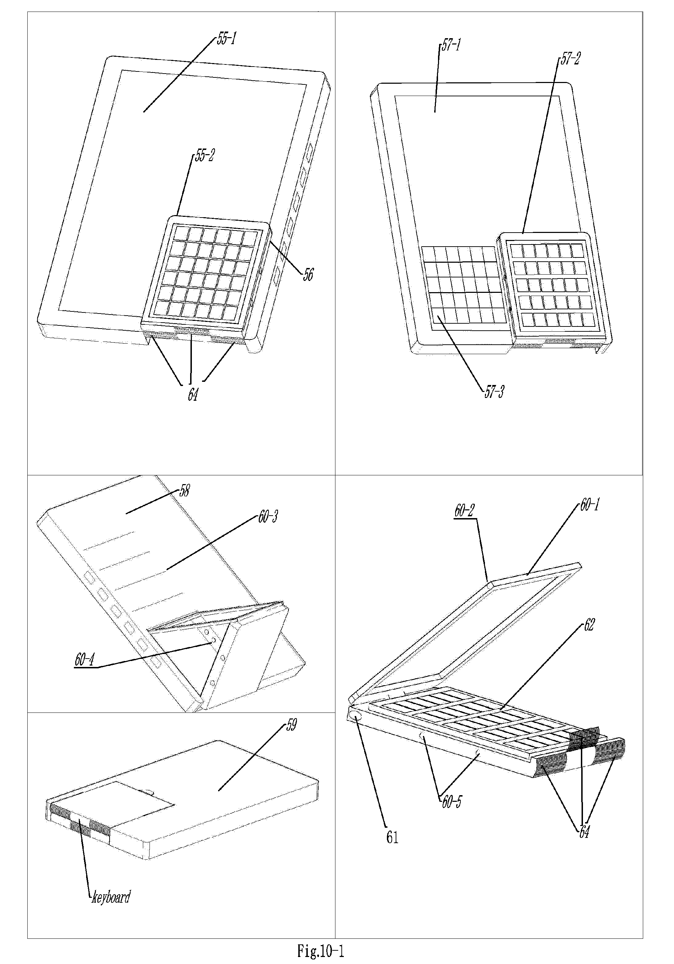

Fig.**10-1** gives 2 kinds of flip hard keyboard tablets which are a little different: a transparent flip hard keyboard tablet without a keyboard cover and a common flip hard keyboard tablet. **55-1** A transparent flip hard keyboard tablet without a keyboard cover. **55-2** A transparent hard keyboard. **56** A pair of magnets fixing the hard keyboard, which are only for location illustration. **64** a plurality of connection ribbons between the hard keyboard and the tablet, which are also able to be used to connect them electrically in the case of a common flip hard keyboard tablet. **57-1** A common flip hard keyboard tablet. **57-2** A common hard keyboard. **57-3** A character dynamically-mapping zone. **58** A view of the tablet standing when the keyboard is flipped backward and a support is pulled up. But the tablet is tilted in the drawing in order to illustrate the back structure of the tablet. **60-3** A support protrusion. **60-4** A support limit pit. **59** A view of the tablet when the keyboard is flipped backward and folded into the keyboard room. **60-1** A support horizontal bar. **60-2** A support limit spring ball. **61** A touch pen as a support which can put up the tablet together with the keyboard. **62** A flip hard keyboard. **60-5** A keyboard limit spring ball.

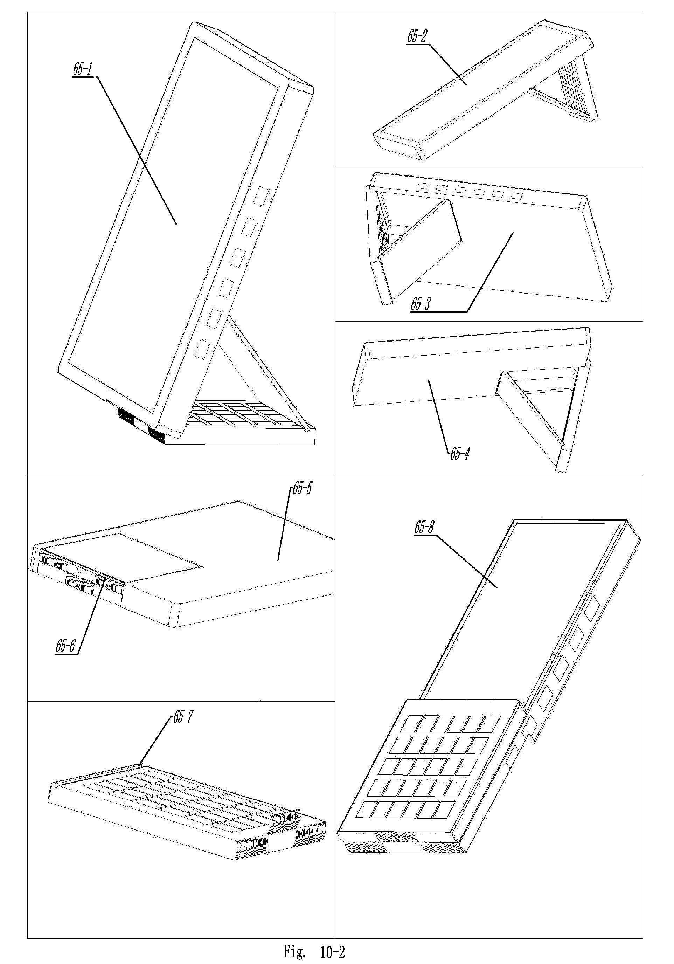

Fig.**10-2** gives a transparent flip hard keyboard tablet with a keyboard cover. **65-1** A view of the tablet standing at a large angle. **65-2** A view of the tablet standing at a small angle. **65-3** A view of the tablet standing at a small angle in another orientation. **65-4** A view of the tablet standing at a large angle in another orientation. **65-5** A view of the tablet with the keyboard flipped backward and folded into the keyboard room. **65-6** A keyboard cover. **65-7** A support groove of the keyboard cover in the flip hard keyboard. **65-8** Aflip hard keyboard phone.

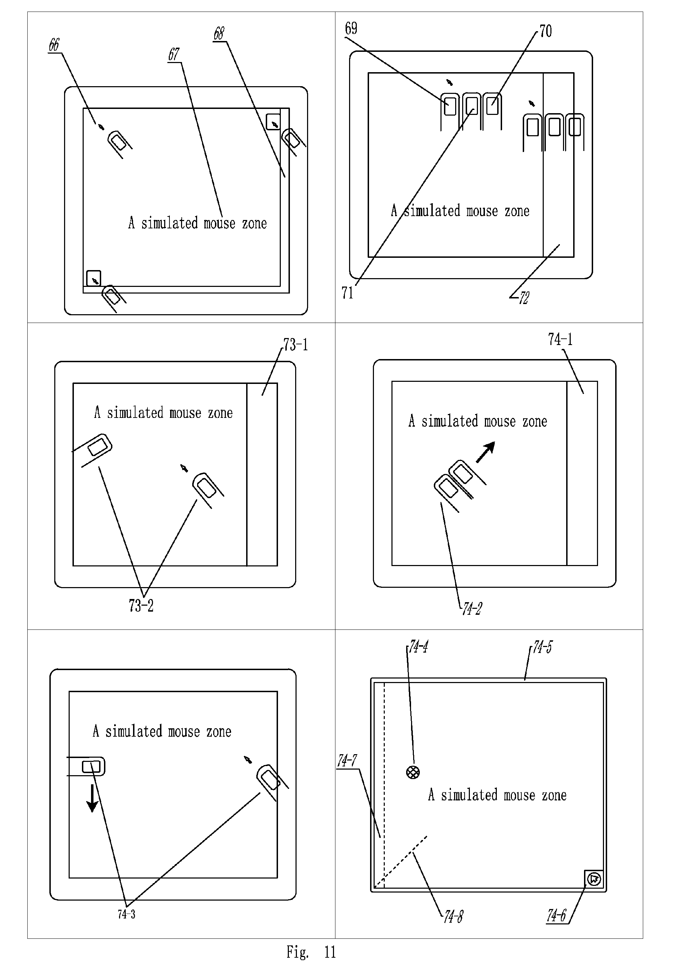

Fig.**11** is a simulated mouse. **66** A simulated mouse cursor. **67** A simulated mouse zone. **68** A simulated mouse dead zone. **69** A left simulated mouse button. **70** A right simulated mouse button. **71** A simulated mouse. **72** A right simulated mouse button dead zone. **73-1** An auxiliary zone. **73-2** Simulating a left click with two hands. **74-1** A conventional touch operation zone. **74-2** Simulating the middle mouse button with two fingers sliding side by side on the touch screen. **74-3** Simulating the middle mouse button by means of a finger sliding together with another finger staying on the touch screen at the same time. **74-4** A pinch point. **74-5** A tablet-protecting frame. **74-6** A user interface toggle button. **74-7** A mis-touch prevention blind zone. **74-8** A 45 degree shift line of the mis-touch prevention blind zone.

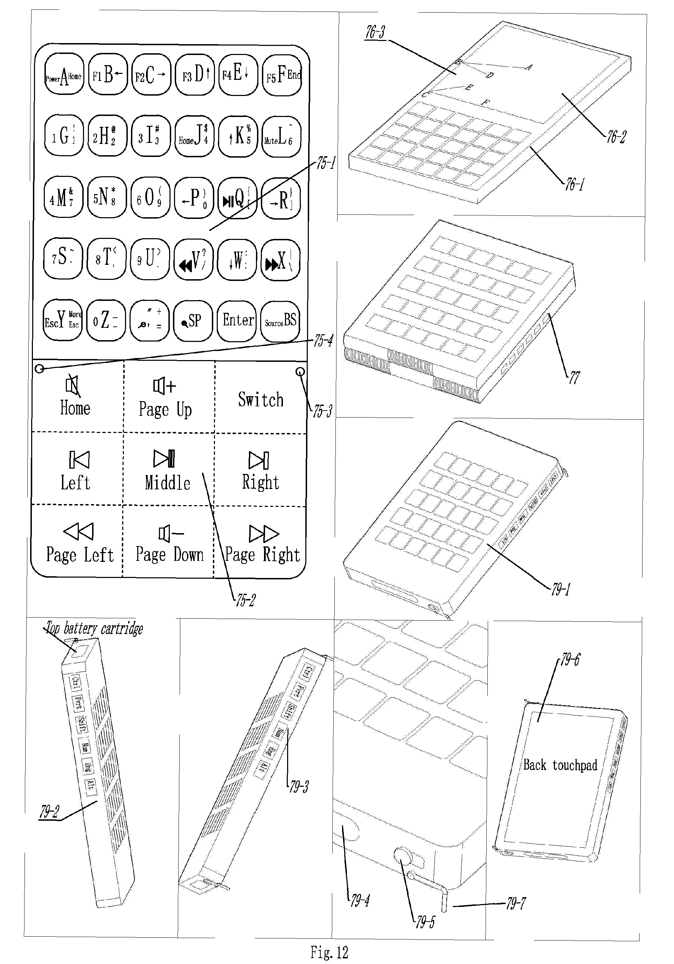

Fig.**12** gives the first standard hard keyboard layout, a touch pad layout and 3 kinds of different handheld keyboard models. **75-1** The first standard hard keyboard layout fit for a handheld keyboard with a remote function. The characters and functions of the hard keyboard layout can be grouped by location, font, font size, and color etc. **75-2** A touch pad layout. **75-3** A Switch key lock indicator light. **75-4** A mute indicator light. **76-1** A bar handheld keyboard. **76-2** A touch pad. **76-3** An illustration of the mouse inertia operation. **77** A flip handheld keyboard. **79-1** A double face handheld keyboard. **79-2** Left side-keys. **79-3** Right side-keys. **79-4** A bottom battery cartridge. **79-5** A hard lefty button. **79-6** A back touch pad. **79-7** A retention hook.

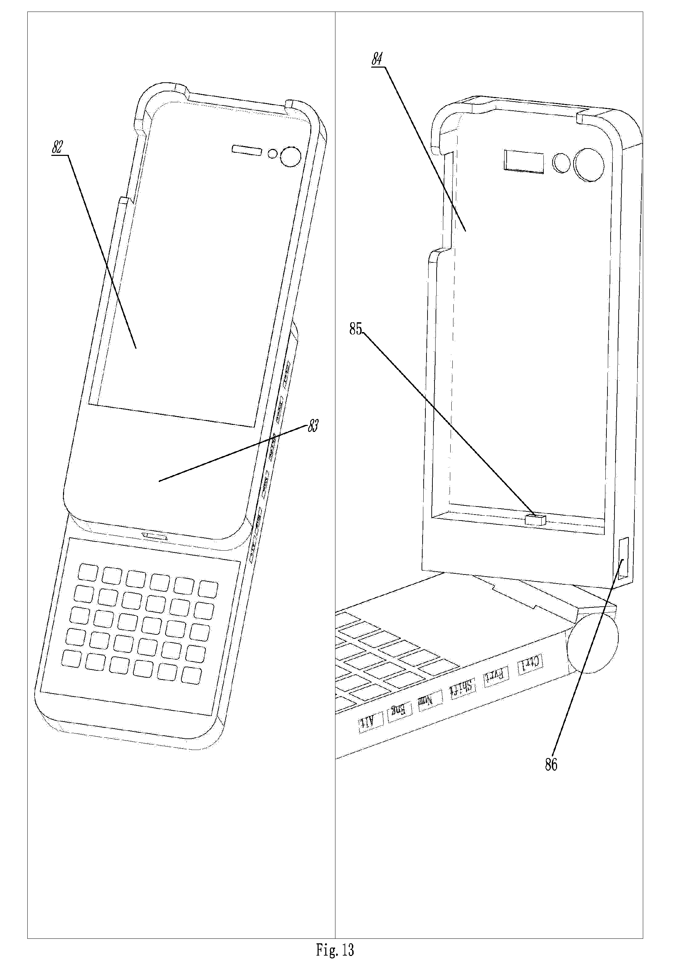

Fig.**13** gives two kinds of cellular phone keyboard cases. **82** A slide cellular phone keyboard case. **84** A flip cellular phone keyboard case with a rotatable jacket. **83** A micro-USB cable shield plate. **85** A micro-USB connector in the case, used to connect with the micro-USB port of a cellular phone. **86** A micro-USB port placed at the case side.

### DETAILED DESCRIPTION OF THE INVENTION

(A)Main keyboard. (a) Hard main keyboard. The main keyboard of the solution can be either a physical hard keyboard or a touch-control soft keyboard. In the case of a hard keyboard, the standard hard keyboard layout **75-1** in fig.**12** or **24-2** in fig.**5** is preferred. In addition, in order to prompt the user to input, the other characters not tagged on the keys of the main keyboard and the nested sub-layouts should be mapped onto the display screen of the device receiving input with the aid of the operating system and/or the input method of the device receiving input. This is shown as character dynamically-mapping zone **57-3** in fig.**10-1****.** Finger positioning marks should be marked on the two keys in the middle of a hard keyboard as **2** in fig.**1** to facilitate the user to position his/her fingers. A hard keyboard should provide a function for use at the dark.
   (b)Soft main keyboard. The finger positioning marks of a soft main keyboard of a cellular phone can be marked on the borders as **7** in fig.**2**. A soft main keyboard of a tablet should allow the user to slide on the screen to a proper place to facilitate the user to input. A soft main keyboard layout should use one of the standard layouts in fig.**3** and **4**, which changes depending on the currently pressed side-key (The layouts of the other mother tongues and languages corresponding to Fvrt are determined by the respective OS and input method).
   (c)Main keyboard matrix. Taking account of the usage consistency between cellular phones and tablets, a main keyboard had better use a 6*5 matrix as **1** in fig.**1**. However, due to a great variety of handheld digital devices, 6*6 matrix as **22**, 5*6 matrix as **21** in fig.**5**, 4*7 matrix and the other reasonable matrixes not listed here are optional. Because cellular phones are small in size, if the end keys of each row are made smaller as **6** in fig.**2**, the middle keys of the main keyboard can be made larger to be used more easily.
   (d)Compatible with a QWERT layout. A main keyboard has 3 kinds of English letter layouts. **13** in fig.**3** is a 6*5 alphabetical matrix. **20** in fig.**4** is a 6*5 matrix imitating a PC keyboard QWERT layout. **21** in fig.**5** is a 5*6 matrix imitating a PC keyboard QWERT layout. These provide convenience for the users who are used to a PC keyboard QWERT layout. In the case of a soft main keyboard, if a system setting option is provided, a user can select one of the above layouts to use conveniently. In order to unify the standard, it is recommended that a main keyboard should employ the English letter layouts as **13** and **14** in fig.**3**.
(B)Side-keys. (a)Kinds of side-keys. The side-keys can be either conventional physical hard keys or touch-control soft keys, or even of a touchpad as **30-3, 30-5, 31-2** and **31-4** in fig.**7**. Wherein the dashed-line boxes of **30-5** and **31-2** in fig.**7** are only for illustration and don't exist on the tablet back. The advantages of a touch pad as side-keys are that the keys need not be tagged and the user need not position his/her fingers accurately, and a handheld digital device can determine the currently active side-key by the currently acting finger detected by the OS or a special software according to the principle that the relative positions of one hand's fingers are constant, i.e., that the sequential relationship of the five fingers of one hand won't change no matter how the holding position of one hand changes.. If the main keyboard is a soft keyboard without a fixed position, and the side-keys is of a touchpad, one set of side-keys can be in common use between a lefty and a righty(a lefty is left handed) with the aid of the attitude sensor(s) of a handheld digital device. Because we can tell whether a user is a righty or a lefty and furthermore tell the correct side-key corresponding to the currently active finger according to whether the holding position of the user's hand is at the right side or at the left side when the device attitude is certain. In the case of a soft main keyboard, even though the side-keys are not of a touch pad but hard or soft keys, it can also be in common use between a lefty and a righty with the aid of the device attitude sensor(s), but in this case, we can't tag the side-keys, because the spatial order of the same set of side-keys are just inverse between a lefty and a righty. Of course in advanced applications, we can tag the side-keys dynamically with the aid of the attitude sensor(s), i.e. every side-keys display its key name dynamically and independently. If the side-keys are soft, some proper physical marks should be marked on some or all of side-keys to facilitate the user to position his/her fingers. A touch pad is the best way to realize the side-keys.
   (b)Variability of side-keys' positions. The Shift key has various possible positions. It can be located on the left side of a cellular phone as **3** in fig.**1**, or at the left of the top side of a cellular phone as **9** in fig.**2**, or on the right side and incorporated into the other side-keys as **25** in fig.**6**, or at the right of the top side of a tablet as **26** in fig.**6**, or on the back of a tablet as **27-1** in fig.**6**, finally or at the upper left corner of a tablet front surface as **28-1** in fig.**6**. The Shift key is operated by the mid-finger of one's left hand when it is incorporated into the other side-keys on the right side of a device as **25** in fig.**6**, and by the thumb of one's left hand when it is in the other positions. The 2Hands key can be located on the left side as **3** in fig.**1**, **28-2** in fig.**6**, or on the back of a tablet as **27-2** in fig.**6**. The 2Hands key is pressed when it is touched and pressed naturally by the root bulge of the thumb of one's left hand. The 2Hands key is not a key with a strong function, and is generally used to direct a device to start initializing for enabling the solution and to indicate that the solution have been enabled and the other solution should be disabled. The 2Hands key generally need not be configured. Except Shift and 2Hands, the other side-keys have also various possible positions such as the right side as **4** in fig.**1**, the left side **31-4** in fig.**7**, or the back of a tablet as **28-3** in fig.**6**, or the outside of a hard keyboard as **48-3** in fig.**8**.
   (c)Variability of side-keys' number. How many languages or characters can be inputted at the same time are determined by the number of the side-keys. At most 8 side-keys can be configured at the same time in the solution as shown in fig.**1**, wherein the Shift and 2Hands keys are on the left side of a cellular phone and the other 6 side-keys: Ctrl, Fvrt, Eng, Num, Ext and Alt are on the right side of the cellular phone. At least 5 side-keys must be configured in the solution as shown in soft keyboard bar phone **5** in fig.**2**, wherein the Shift key is at the left of the top side of the phone and the other 4 side-keys: Ctrl, Eng, Num and Alt are on the right side of the phone.
   (d)Best layout of side-keys. It differs from phones to tablets. The best side-key layout of a phone is the eight-key layout as shown in fig.**1**. The best side-key layout of a tablet is the six-key layout as **25** in fig.**6**, wherein all the side-keys including the Shift key are incorporated onto the same side. Considering the usage compatibility between phones and tablets, the 6 side-key layout on which all side-keys are incorporated onto the same side as **25** in fig.**6** is preferred to be used as the standard side-key layout, wherein the order of the side-keys is Ctrl, Fvrt, Shift, Num, Eng, Alt. This standard side-key layout can provide at least 30*3*2=180 kinds of possible inputs more than about 100 kinds of inputs of a PC keyboard.
   (e)Sets of side-keys. More than one set of side-keys can be configured. In this case, the Shift key is generally incorporated with the other side-keys on the same side and 2Hands is not configured. Particularly a tablet has two holding attitudes: longitudinal and transverse holding attitudes, and moreover each holding attitude has two holding positions such as the right side and the left side as shown in fig.**6**. The tablet as **30-1** and **30-4** shown in fig.**7** is configured with 2 sets of side-keys respectively on the right side and at the left of the back of the tablet to facilitate the user to change the holding gesture and position. Considering that a device can be in common use between a lefty and a righty, more sets of side-keys can be configured. The tablet as **31-1** and **31-3** shown in fig.**7** are configured with 4 sets of side-keys only in a longitudinal attitude. They are the 2 touch pads on the right side and at the left of the back for a righty, and the other 2 touch pads on the left side and at the right of the back for a lefty, and they disable each other, i.e. one of them is enabled, the other three are disabled to avoid confusion. **79-1** in fig.**12** is a double face handheld keyboard, 2 sets of side-keys as **79-2** and **79-3** are configured on the left and right sides, which respectively correspond to the front keyboard and the back touch pad used as a mouse. If a lefty button is configured as **79-5**, the double face handheld keyboard is easy to be in common use between a lefty and righty. A handheld digital device should use one set of side-keys except a double face handheld keyboard as **79-1** in fig.**12**.
   (f)Avoiding mis-operation of side-keys. For example, the side-keys on the right side should have been held and operated by the left hand, but they are actually held by the right hand of the user. But in this case, because only the palm contacts the right side, it is difficult to produce 4 contact points at the same time at the beginning of holding (generally 2 contact points). So no matter whether the side-keys are hard keys or soft keys or even of a touchpad, according to this feature, we can determine whether the holding gesture of the side-keys is correct or not, and furthermore determine whether to enable the side-keys and the main keyboard layout. Of course, we can also avoid mis-operation completely by configuring a 2Hands key.
   (g)Pressing methods of side-keys. The most difficult technical problem of the solution is that the left hand not only holds a handheld digital device, but also must perform the pressing actions of side-keys (except Ctrl, Alt, and the Shift key on the top side of a device). It is very important how to distinguish the user's inputting presses (and/or touches) of the side-keys from his/her holding presses (and/or touches) of the side-keys. The solution gives 6 methods as below. ①releasing the finger corresponding to a target side-key in the first instance and then pressing/touching back at once. This method is suitable for both hard and soft side-keys, and also a touch pad used as side-keys. It has a good hand-feel and there are no operations by mistake. ②Relaxing the corresponding finger at once after pressing/touching a target side-key, but the finger does not leave the side-key and still holds the side-key naturally. This method is suitable for hard side-keys. In this case, hard side-keys should be made strong enough to avoid mis-operation.③After a target side-key is pressed/touched, does not relax the corresponding finger until the function of the target side-key is no longer needed. When relaxing the side-key, the finger does not leave the side-key and still holds the side-key naturally. This method is fit for hard side-keys. Because of continuous presses of side-keys, these hard side- keys cannot be made too strong in order to avoid the fatigues of the fingers. These side-keys can be made by means of thin keys, plane keys and dented keys to avoid mis-operation, so they cannot be pressed validly when they are held naturally by fingers, but they can when they are pressed with a little larger force. ④Releases the corresponding finger continuously and does not press/touch back until the function of a target side-key is no longer required. ⑤which side-key is pressed currently, is determined by which side-key is receiving the biggest pressing/touching "force" by means of comparing among all of the side-keys. The quotation marks at the word "force" mean that the force need not be common force, it may also be the other response etc. from a side-key when it is pressed and/or touched by a larger force. ⑥Whether a side-key is pressed by the user, is determined by whether the "force" difference of the side-key between the holding and inputting press and/or touch is up to a default value. So a naturally holding initial pressure should be preset for each side-key, and then a method should also be provided to the user to modify the naturally holding initial pressure for better using experience. The first press method is preferred.
   (h)Activation and deactivation of side-keys. When Fvrt, Shift, Num and Eng are pressed at the same time, the side-keys are activated and the main keyboard enables the layout corresponding to Fvrt or Eng. When the 6 side-keys are all released after they are activated, the side-keys are deactivated. The main keyboard can be used for the other purposes when the side-keys are not activated.
(C)One-hand keyboard. The side-keys can be integrated into the main keyboard too. **22, 23** and **24-1** in fig.**5** give 3 kinds of one-hand keyboard layouts which provide conveniences for users who are not used to two-hand operations or have not the ability to operate with two hands. In these cases, when a side-key is pressed, it should be highlighted or indicated by a light to avoid confusion. For example, when a soft one-hand keyboard as **22** in fig.**5** is enabled, Fvrt is highlighted; when Ctrl and/orAlt are pressed, they are highlighted, Eng is highlighted too and the other side-keys are dis-highlighted at the same time, and after a shortcut operation is completed, Ctrl and Alt are dis-highlighted and Fvrt is highlighted simultaneously. If the main keyboard has had any input operation, the highlight relations among Fvrt, Eng, Num are mutually exclusive, and if the main keyboard has not had any input operation since one of these side-keys is pressed, the highlight relations among these side-keys is not mutually exclusive in order to realize joint presses of these side-keys. The Shift key is dis-highlighted when any other side-key is pressed, and continuous presses on the Shift key switch the highlight status itself and do not change the highlight statuses of the other side-keys. The missing SP, Enter, BS keys in layouts **23** and **24-1** are configured on the number and punctuation layout which is not illustrated here for the sake of brevity. This one-hand solution can also be combined with the above principal two-hand solution. So, when a device is held by a single hand, only the one-hand keyboard is used and operated by a single hand, and when the device is held by two hands, the left hand activates the side-keys and the right hand operates the main keyboard. The important distinction between a one-hand keyboard and a popular QWERT keyboard is: (a) the keys of each row of a one-hand keyboard is limited, 6 keys is preferred and 5 or 4 keys is also optional, so a single key of a cellular phone can be made big enough. But the keys of each row of a QWERT keyboard can be up to 10 at most, so a single key of a cellular phone with a QWERT keyboard cannot be made big enough; (b) Although a single key of a tablet with a QWERT keyboard can be made big enough, but each row is too wide to fit for simultaneous operations by multiple fingers of a single hand, because it is difficult for the user to position his/her fingers accurately on the wide keyboard layout. (c) No matter whether a device is a phone or a tablet, a QWERT keyboard is only fit for operations by a single finger of a single hand, but a one-hand keyboard is not only fit for operations by a single finger of a single hand, but also fit for simultaneous operations by multiple fingers of a single hand and touch-typing at a high speed. (d) Even though a one-hand keyboard is operated by a single finger of a single hand, the hand-feel becomes much better. As a general rule, a two-hand keyboard but a one-hand keyboard is preferred. Of course, in order to adapt to a lot of application occasions, a main keyboard can also use a one-hand layout at the same time when a plurality of side-keys are configured.
(D)Simulated mouse. There are three kinds of parallel solutions. (a) We can combine a touch finger and a plurality of side-keys together to simulate a mouse. A forefinger, a mid-finger or the other finger can be served as a simulated mouse as **71** in fig.**11**. When the simulating finger touches on the touch screen, a cursor of the simulated mouse appears at the upper left corner of the simulating finger as **66** in fig.**11**. When the finger leaves the touch screen, the simulated mouse cursor hides temporarily to synchronize the user's feeling. This is a little different from a PC mouse. If Num, Eng and Fvrt are redefined and reused respectively as the left, right and middle buttons of the simulated mouse, a complete simulated mouse solution is realized (The middle button function of the simulated mouse is enabled when pressing Fvrt first, and the function is disabled when pressing Fvrt again). Here Num, Eng and Fvrt can also be written as NumL(left), EngR(right) and FvrtM(middle). Although the side-keys are redefined and reused, because it is impossible for a keyboard input operation and a simulated mouse input operation are performed simultaneously, so the confusion of two kinds of operations won't take place. The relative positions between the simulated mouse cursor and the simulating finger is constant. When the simulating finger moves at the right and bottom of the screen, there will be a simulated mouse dead zone which is about half a finger wide and on which we cannot simulate a mouse as **68** in fig.**11**. (b) In order to be able to simulate a mouse without the aid of side-keys, we can take advantage of multi-touch technology to use the fingers at the left and right of the simulating finger respectively as the left mouse button as **69** and right mouse button as **70** (the fingers used as mouse buttons can also be the fingers of the other hand as **73-2**). The essence is that whether a simulated mouse click is a left click or a right click is determined by whether the touch point of a finger simulating a mouse button is at the left or right of the finger simulating a mouse. And moreover if a sliding action of two fingers (for example the fore-finger and mid-finger) side by side on the screen is defined as a scrolling operation of the middle mouse button as **74-2**, a mouse can be simulated completely only by fingers. A middle mouse button can also be simulated by one finger sliding together with another finger touching and staying on the screen, and of course these two fingers can also belong to two hands respectively as **74-3**. The latter method simulating a middle mouse button should be distinguished from the method which zooms the user interface out and in by pinching two fingers in and out. When simulating a mouse only by fingers and without the aid of side-keys, a right simulated mouse button dead zone which is about one and a half fingers wide will be there as **72** in fig.**11**. Taking account of the simulated mouse dead zone and the right simulated mouse button dead zone together, there are two zones at the right and bottom of the display screen which are not fit for simulating a mouse. The bottom zone can generally be ignored because it is small. The right zone is only fit for common touch operations, which can be used as a toolbar zone fit for common touch operation as **74-1** in fig.**11** or an auxiliary zone without any user interface elements as **73-1** in fig.**11** or a static display zone incorporated into the simulated mouse zone at the left. (c)In the case of a device with a touch pen, the touch pen can also be used to simulate a mouse with the aid of side-keys or fingers. Because common touch operations on a screen have obvious advantages in some applications and operations, so the simulated mouse solution of this invention cannot replace the common touch operations completely. Whether a user interface employs a simulated mouse interface or a common touch operation interface or a combination of the above two interfaces should be determined by a specific application. In general, an edit area or a work area is fit for a simulated mouse interface as **67** in fig.**11**, and a toolbar area is fit for a common touch operation interface. An interface toggle button can be configured as **74-6**, so a user can toggle the interface at any time according to his/her usage and operation requirement. In this way, an application can be changed dynamically between a simulated mouse interface and a common touch operation interface. The above simulated mouse solution on a touch screen can also be applied on a mouse touch pad, but the mouse touch pad has not the simulated mouse dead zone and need not hide the mouse cursor too. However, when a mouse is simulated on a mouse touch pad only by fingers, there will be a left simulated mouse button dead zone and a right simulated mouse button dead zone. This problem can be improved by reference to the enhanced touchpad in the handheld keyboard section.
(E)Usage of keyboard. Taking a tablet as **25** in fig.**6** as an example, the main keyboard is a soft one on the touch screen, and employs a 6*5 key matrix, and can be slidden on the screen according to the user's requirement. The main keyboard has 6 keys each row, wherein the 4 keys in the middle are operated respectively by the forefinger, mid-finger, ring finger and little finger of the right hand. The first key at the left end of each row is operated by the forefinger of the right hand moving to the left, and the final key at the right end of each row is operated by the little finger of the right hand moving to the right. The side-keys are configured with 6 keys: Ctrl, Fvrt, Shift, Num, Eng and Alt, which are located on the right side of the tablet. Fvrt, Shift, Num and Eng are operated respectively by the forefinger, mid finger, ring finger and little finger of the left hand. Ctrl is operated by the forefinger of the left hand moving upward, and Alt is operated by the little finger of the left hand moving downward. Wherein Num, Eng and Fvrt respectively correspond to the left, right and middle buttons of the simulated mouse too in order to cooperate with the user interface which has a simulated mouse function. The mother tongue is Chinese. When the user interface comes into edit mode, or the user presses Ctrl, Alt etc., the main keyboard appears. And when the edit ends, or the user touches on non-edit area, or the user completes a shortcut operation, or the user presses Alt+Fvrt+BS at the same time, the main keyboard hides.
   (a)When Fvrt is pressed, Chinese Pinyin layout **13** in fig.**13** displays on the main keyboard to allow the user to input Chinese Pinyin (this layout also displays as soon as the main keyboard is enabled). (b) And then if Shift is pressed, Chinese punctuation layout **15** in fig.**3** displays to allow the user to input Chinese punctuations. At this time, if the More key in layout **15** is pressed, Chinese punctuation extension layout **16** in fig.**3** displays. If the return key Rtn is pressed after completing a input operation(s) with layout **16**, the layout returns to the last layout **15**. If the characters in nested sub-layouts is mutually exclusive, i.e. at most only one character in the same layout is inputted at a time, as soon as the user completes the input operation, the layout can return to the last one at once without pressing Rtn. In addition, if a side-key is pressed when a nested sub-layout displays, the nested sub-layout is changed to the layout corresponding to the pressed side-key at once. (c)When Eng is pressed, Fvrt and Shift are restored to be in released status automatically (when one of Fvrt, Eng and Num is pressed, the other two side-keys and Shift are restored to be in released status automatically if the main keyboard has had any input action before, the same as below), and English a-z layout **13** in fig.**3** displays to allow the user to input English a-z letters. (d)When Eng+Shift are pressed, English A-Z layout **14** in fig.**3** displays to let the user to input. (e) When Num is pressed, number and English punctuation layout **17** in fig.**4** displays to allow the user to input.
   (f)When Num+Shift are pressed, layout **18** in fig.**4** displays to let the user to input. When the Math, Order, or Used key in layout **17** is pressed, the corresponding math symbol layout, ordinal number layout, or recently inputted uncommon character layout displays to let the user to input, but these nested sub-layouts are not illustrated and described for the sake of brevity. If the Date key in layout **17** in fig.**4** is pressed, a menu with various Chinese and foreign formats of current date displays to let the user to select and input, which includes a cancel menu item to let the user to give up and return. The More key in layout **17** provides a possibility for the OS or an input method to provide more languages and symbols to allow the user to input, a menu pops up to let the user to select when the More key is pressed. The Cstm key in this layout provides a possibility for the device end user to customize the layouts corresponding to Cstm and Cstm+Shift. The device vendor or an input method developer should provide methods for the end user to customize the layouts. In general, the contents customized by the end user can be in varied forms, it can be characters, character strings, pictures, audio or video data blocks, or shortcut commands. Once customized, the user can input the corresponding contents like the above usage.
   (g)When Ctrl and/or Alt is/are pressed, Fvrt, Num and Shift are in released status automatically, but Eng is in pressed status automatically (even though the Eng key is not pressed and/or touched at this moment), so the English a-z layout displays by default to allow the user to input commands similarly to the shortcut function of a PC keyboard, and if they cooperate togetherwith Shift and the other side-keys, more shortcut layouts will display for input. All shortcut operations are the same no matter whether the tablet is in edit mode or not. (h)Inputs of full-width English letters, numbers and punctuations. (Fvrt+Eng), (Fvrt+Eng) +Shift, (Fvrt+Num), (Fvrt+Num) +Shift respectively correspond to full-width English a-z, A-Z, number and punctuation layouts. Wherein the round brackets mean that the two side-keys inside them must be pressed continuously, and the other key-press action(s) and input operation(s) are not allowed between the press actions of the two side-keys. (i)When a finger simulating a mouse acts on the simulated mouse zone of the touch screen, left click, double clicks, right click, scrolling operation and hover help etc. can be realized with the aids of Num, Eng, Fvrt. Of course the mouse can also be simulated only by fingers at the same time or by a touch pen.
(F)Examples of cellular phones. There are 7 kinds of cellular phones applying the solution given as below. (a)A bar phone with a touch screen soft keyboard is illustrated as **5** in fig.**2**. The Shift key is at the left of the top side of the phone as **9**. The other 4 side-keys are Ctrl, Eng, Num and Alt on the right side of the phone as **8**. This phone is fit for users speaking English. In order to make a single key big enough, the end keys of each row are made smaller as **6**. The finger positioning marks at the left and right borders of the phone are used for the user to position his/her fingers easily as **7**. (b)A hard keyboard bar phone is illustrated as **10** in fig.**2**. The lower half is a hard keyboard, and the upper half is a touch screen. (c)A slide phone is illustrated as **11** in fig.**2**. There are two sets of main keyboards: a soft one and a hard one. When the hard keyboard is not slidden out, the soft keyboard is used to input; when the hard keyboard is slidden out, the hard keyboard is used to input. The characters which are not tagged on the hard keyboard and the nested sub-layouts which are enabled when More, Used, Math, Order, Date or Cstm etc. is pressed, should be mapped onto the touch screen (As long as a device is with a hard keyboard, the enabled sequence of the hard keyboard and the soft keyboard, and the mapping of nested sub layouts are the same as the above no matter whether the device is a cellular phone or a tablet. The following will not repeat it). (d) Aflip phone with a rotatable screen is illustrated as **12** in fig.**2**. Compared with a slide phone, only the combining way of the keyboard and the display screen is different. Besides, (e) A flip phone with a single screen and (f) Aflip phone with double screens are similar to a flip phone with a rotatable screen. So they are described no more here. The above phone styles all are popular in the market at present. (g)A flip hard keyboard phone is illustrated as **65-8** in fig.**10-2**, please refer to the section about a flip hard keyboard tablet.
(G)Examples of tablets. (a) **25, 26** and **27-1** in fig.**6** are 3 kinds of touch screen soft keyboard tablets which side-keys are mostly at the right side. ①Shift and Ctrl, Fvrt, Eng, Num, Alt are all integrated onto the right side of the tablet without Ext and 2Hands as **25**. ②Shift **26** is at the right of the top side of the tablet, the other side-keys are on the right side which are the same as **4** in fig.**1**, and there is not a 2Hands key. ③Shift **27-1** and 2Hands **27-2** are at the right of the back of the tablet, and the other side-keys are on the right side of the tablet which are the same as **4** in fig.**1**. (b) **28-1** in fig.**6** is a touch screen soft keyboard tablet which side-keys are at the left side. Shift **28-1** is at the upper left corner of the tablet front surface. 2Hands **28-2** is on the left side and the other side-keys **28-3** are at the left of the back of the tablet. (c) **30-1** and **30-4** in fig.**7** is a hard keyboard tablet with two sets of side-keys which respectively are on the right side as **30-3** and at the left of the back of the tablet as **30-5**. When one set of side-keys is enabled, the other set of side-keys is disabled to avoid confusion. The hard keyboard is able to be drawn out and pushed in like a drawer, and received into a keyboard room when not in use. This tablet provides 2 holding positions of side-keys. (d) **31-1** and **31-3** in fig.**7** is also a hard keyboard tablet, but it has 4 sets of side-keys which are respectively on the left side as **31-4**, on the right side, at the left of the back of the tablet and at the right of the back of the tablet as **31-2**. These 4 sets of side-keys disable each other. This design is convenient for being in common use between a lefty and a righty. The side-keys of the above 2 kinds of hard keyboard tablets in fig.**7** are realized by touchpads. The connection between the hard keyboard and the tablet is similar to a slide phone. Because it is a mature technology, so it need be repeated no more.
   (e) Foldable hard keyboard tablets. 2 kinds of foldable hard keyboard tablets are illustrated as below. ①Fig.**8** is one of foldable hard keyboard tablets. **41-A** and **41-B** in fig.**8** are the same, but **41-B** is with a keyboard cover. Hard keyboard **48-1** in fig.**8** is connected with tablet **42** by keyboard slide rods **47-1**, keyboard axes **49** and keyboard guide-ways **45**. Keyboard axis limit pits **50** are configured in the heads of keyboard axes **49**. When these limit pits match and join with keyboard limit spring balls **44** (a half ball is on the top of a spring) in the guide-ways of the tablet, the keyboard respectively is drawn out to be ready for input as **39** and received into the keyboard room as **41-B**. The heads of keyboard axes **49** are of semi-square and semi-circle (The enlarged view of an axis is at the lower right corner of fig.**8**). When the two heads are slidden into keyboard axis limit notches **43**, the axes are confined to the notches to be unable to pass through, but the heads of keyboard slide rods **47-1** are able to pass through because they are made thinner than the other parts of the rods. So when keyboard axis limit pits **50** match and join with keyboard axis limit spring balls **46**, the keyboard can be folded backward to be used as a support of the tablet as **40**. In order to get a larger freedom of inclination when the tablet is standing, keyboard slide rod gaps **47-2** are configured at the two sides of the keyboard room, which respectively correspond to keyboard slide rods **47-1** to allow the rods to pass through when the keyboard is folded. Of course the keyboard slide rod gaps can also be not configured in order to avoid unexpected drops of the keyboard from the gaps when the keyboard is drawn or pushed. A rotation constrain mechanism is configured between keyboard axes **49** and the keyboard, so the tablet is incapable of rotating freely under the effect of the weight of the tablet itself, but it can be rotated by the user with a larger force.

When touch pen **53-1** used as a support rod is drawn out and cooperates with the keyboard, the tablet can be put up in another orientation as **41-A**. Of course the tablet can be put up in another orientation without the touch pen. The touch pen can also be used as a mouse with the aids of side-keys and fingers besides it is used as a pen or a touch tool. The touch pen can be made as a scalable structure in order to adapt to the limited room receiving it in the hard keyboard. The limit pits in the touch pen as **53-3** in the upper half of fig.**9**, cooperate with a limit spring ball inside the keyboard to be able to prevent the touch pen from sliding freely. Limit spring ball guide-way **53-2** in the touch pen allow the touch pen to pass smoothly through the parts except the limit pits in order to avoid hard-going feel when the user draws and pushes the touch pen. Hard keyboard **48-1** is at the right side of the tablet and side-keys **48-3** are on the outer side of the hard keyboard and realized by a touchpad (if the layouts of the hard keyboard display dynamically, the keyboard can be in common use between a lefty and a righty easily, but considering a variety of factors, what is employed here is a hard keyboard which layouts do not display dynamically).

② **54-1** in the lower half of Fig.**9** is another foldable hard keyboard tablet. Hard keyboard **54-2** is at the bottom side of the tablet and side-keys **54-3** are on the right side of the tablet. Touch pen **54-4** used as a support rod is different from the above touch pen **53-1**. Touch pen **53-1** is inside the keyboard and the section is oval. And Touch pen **54-4** is outside the keyboard and the section is round rectangle, which provides another optional solution. Touch pen **54-4** is connected with the keyboard by trapezoidal guide-way **54-7** inside the touch pen and trapezoidal guide rail **54-6** on the keyboard. A limit mechanism is configured between the guide way and the guide rail (please refer to the above 53-1, **53-2** and **53-3**). **54-5** is a view of the tablet standing. The other aspects of the tablet are the same as the first foldable hard keyboard tablet, which therefore are repeated no longer.

(f) Flip hard keyboard tablets. Two kinds of flip hard keyboard tablets are illustrated in fig.**10-1**. And **55-1** is a transparent flip hard keyboard tablet without a keyboard cover. **57-1** is a common flip hard keyboard tablet. The hard keyboard is connected with the tablet physically and electrically by connection ribbons **64.** When the hard keyboard is flipped frontward to be on the touch screen of the tablet, it is ready for input as **55-1** and **57-1**. When the hard keyboard is flipped backward and folded, and keyboard limit spring balls **60-5** match and joint with support limit pits **60-4** (just as the name implies, it is also used as the limit pits of the support) at the two sides of the keyboard room, the hard keyboard is received into the keyboard room as **59**. Connection ribbons **64** are made from soft materials with strong toughness, and arranged alternatively. The two ends of each ribbon are connected with the hard keyboard and the tablet respectively. Support **60-1** is connected with hard keyboard **62** by a rotation axis. The rotation axis can be a controlled rotation mechanism, but it can be not too, this should be determined according to the thickness of the keyboard and the size of the keyboard frame etc. A plurality of pairs of support limit pits **60-4** are arranged equidistantly along the two sides of the keyboard room in the tablet back. When the hard keyboard is flipped backward and the support on the hard keyboard is pulled up, a pair of support limit pits match and joint with support limit spring balls **60-2** at the two ends of the top horizontal bar of the support to be able to put up the tablet stably as **58**. A plurality of mini-protrusions as **60-3** can also be configured on the tablet back and outside the keyboard room in parallel with top horizontal bar **60-1** of the support, which can be used to match and joint with the horizontal bar to support the tablet with a larger freedom of inclination. Magnets can be configured with the support horizontal bar and the mini-protrusions to be used to fasten them (of course, it is also pretty good if only a plurality of mini-protrusions with magnets are configured equidistantly both inside and outside the keyboard room, and meanwhile the support limit pits and the support limit spring balls are configured no longer). When touch pen **61**, which is able to be used as a support rod, is drawn out and cooperates with the hard keyboard and the support, the tablet can be put up in another orientation (please refer to **41-A** in fig.**8**). A limit mechanism between the touch pen and the hard keyboard can be configured to prevent the touch pen from sliding freely (please refer to **53-1, 53-2, 53-3** in fig.**9**). If the keyboard is too thin to receive a touch pen having a good hand feel, touch pen **61** can be degenerated into only a support rod, or even the support rod can be omitted too. If the touch pen is necessary, it can also be placed at the front end of the hard keyboard near the connection ribbons. When the hard keyboard is flipped frontward to be on the tablet front surface, it is fastened to the tablet by magnets 5**6.** When support **60-1** is folded and stacked on the hard keyboard, it is fastened by magnets too (or by buckles).

Transparent flip hard keyboard **55-2** is used to transmit mechanical and electrical information etc. of the pressed keys to the soft keyboard which is under the hard keyboard and on the touch screen of the tablet. At least the top of each key of the hard keyboard is transparent. And the hard keyboard should be made from materials with a good hand feel which is good for transmitting force, electricity and the other information of the pressed keys. In fact, it is a hand-feel optimizing tool of the soft keyboard of the tablet. It employs a 6*6 matrix, and the soft keyboard on the touch screen employs a one-hand keyboard layout with a 6*6 matrix as **22** in fig.**5**, and a row of soft side-keys is always redundant. In this way, when the user holds the tablet at the left side and cannot operate the side-keys on the right side, or when the user uses the keyboard with a single hand in leisure occasions, these soft side-keys can replace the side-keys on the right side. This certainly provides convenience for a lefty or a one-hand user too. Of course, this keyboard layout with redundant side-keys may be not used too. **57-2** is a common flip hard keyboard, the electrical connection between the keyboard and the tablet is realized by mini-conductor(s) inside the connection ribbons, orwirelessly. The characters not tagged on the hard keyboard, and the nested sub-layouts, should be mapped onto character dynamically-mapping zone **57-3** at the left of hard keyboard **57-2**. Of course, the characters tagged on the hard keyboard can also be mapped onto the zone.

Fig.**10-2** is a transparent flip hard keyboard tablet with a keyboard cover. Keyboard cover **65-6** is connected to the tablet by an axis/axes at the tablet back. When the keyboard cover is unfolded and inserted into support groove **65-7** and fastened to the groove by magnets, it can be used as a support to put up the tablet in 4 attitudes. **65-1** is a view of the tablet standing in a large inclination. **65-2** is a view of the tablet standing in a small inclination. **65-3** is a view of the tablet standing in a small inclination in another orientation. **65-4** is a view of the tablet standing in a large inclination in another orientation. The keyboard cover may also be inserted between the rows of the keyboard keys for the user to change the inclination in which the tablet stands. When the keyboard is flipped backward, folded and received into the keyboard room, the keyboard cover covers the keyboard shown as **65-5**. The keyboard cover is fastened to the keyboard and the tablet by magnets or buckles. Except the keyboard cover and the support mechanism, a transparent flip hard keyboard tablet with a keyboard cover is the same as a one without a keyboard cover completely, so this is repeated no more. The side-keys of the above 3 kinds of tablets are on the right side of the tablet, and the keyboard is at the bottom side of the tablet. One of the benefits of a flip hard keyboard is that the hard keyboard body can be made thicker than the keyboard room, so when the hard keyboard is folded and collapsed, it can be received into the keyboard room by means of proper compression. A transparent flip hard keyboard tablet is preferred. A flip hard keyboard is also suitable for a cellular phone which has a space to be used as a hard keyboard room as **65-8** in fig.**10-2**.

(H)Handheld keyboards. The solution can be combined not only with a handheld digital device very well, but also with a mouse touch pad as an independent handheld keyboard. There are 3 kinds of handheld keyboards as shown in fig.**12****.** (a) **76-1** is a bar handheld keyboard. The lower half is a hard keyboard, and the upper half is a touch pad or touch screen **76-2**, which is similar to a notebook's touch pad and used as a mouse operated according to the methods given by the solution. The locations of the hard keyboard and the touch pad/screen can also be swapped, i.e. the touch pad/screen is on the lower half and the hard keyboard is on the upper half. (b) A flip handheld keyboard 77 comprises a transparent flip hard keyboard and a touch screen under the keyboard. When the keyboard is stacked onto the touch screen, it is used as a keyboard, and when the keyboard is flipped and opened, it is used as a mouse touch pad. Please refer to the transparent flip hard keyboard tablet in fig**.10-1** to further understand it. The biggest benefit of this handheld keyboard is that its function is completely independent, and the devices receiving its inputs need not map the nested sub layouts and the characters not tagged on the hard keyboard. (c)A double-face handheld keyboard **79-1** comprises a front hard keyboard and a back touch pad **79-6**. Two sets of side-keys **79-2** and **79-3** are configured on the left and right sides of the keyboard, which are used to cooperate with the keyboard and the touchpad respectively. When the side-keys controlling the keyboard on the right side is enabled, the keyboard is enabled accordingly, and the side-keys on the left side and the touch pad are disabled at the same time; when the keyboard is flipped over transversely, the side-keys controlling the touch pad on the left side (in fact on the right side at this time) is enabled, the touch pad is enabled accordingly, and the keyboard and the side-keys at the right side are disabled at the same time. A lefty button **79-5** is configured on the bottom side of the keyboard, so the keyboard is in common use between a lefty and a righty(The above flip handheld keyboard can be done like this, because the layouts of both the side-keys and the soft keyboard can be changed correctly according to the change of the keyboard attitude). The connection between a handheld keyboard and the devices receiving its inputs, can be realized by a cable such as a USB cable, or wirelessly such as the Bluetooth technology. If they are connected wirelessly, battery cartridge(s) **79-4** are configured at the top and/or bottom side of a handheld keyboard. Retention hooks **79-7** for a tablet or a cellular phone are at the right of the top and bottom sides of the keyboard, which provide a convenience for the user of a device without a hard keyboard. When the retention hooks hook at the right side of a phone or a tablet, and the handheld keyboard together with the phone or the tablet is held by the left hand, the handheld keyboard can be used as the hard keyboard of the phone or the tablet. **79-7** in fig.**12** is a view of a retention hook stretching out. The hooks should be rotated over to hide at the bottom and top sides of the handheld keyboard when not in use. And the hooks should be made from soft and strong materials, which can be deformed appropriately to match devices with different side shapes very well. If don't care about redundancy, the other two retention hooks may be configured at the left of the top and bottom sides of the keyboard, in this way, the keyboard can be in common use between a lefty and a righty. The above flip handheld keyboard is fit for configuring retention hooks too. A handheld keyboard should employ number and punctuation layouts which include arrow keys etc. as **19-1** and **19-2** in fig.**4**. If the keyboard of a handheld keyboard is a hard keyboard, it should employ standard layout **24-2** in fig.**5**.

In order to enhance the function of the touch pad of a handheld keyboard, the touch pad can be divided into 9 key zones as **75-2** in fig.**12**. Wherein Home is the Home key; Switch is used to switch the functions of the key zones and the keys of the main keyboard; Left, Middle and Right correspond to the left, middle and right mouse buttons respectively, and in this way, a handheld keyboard has 3 sets of mouse buttons: reusing some of side-keys as the above, simulated by fingers, and some of the key zones on the touch pad here; Page Up, Page Down, Page Left and Page Right are used to flip pages upward, downward, leftward and rightward. The corresponding upper keys of the 9 key zones are icon keys, they are used to play and control multimedia when the Switch key is locked. Both the grids and the names of the key zones may be printed with light color and dashed lines, of course they can be not printed too, or only the grids are printed and the key names are described in the user's manual. In order to improve the mouse operations of the touch pad, a mouse control action is added newly, i.e., when the finger controlling mouse cursor slides towards the edge of the touch pad and stops at the edge, the cursor on a display device(s) go on moving by inertia, until the cursor gets to the edge of the display device(s), or until the touch action of the finger changes before the cursor gets to the edge of the display device(s). In this way, we need not repeat sliding with a finger continuously when the cursor needs to be moved on a display device(s) for a long distance. As **76-3** shown in fig.**12**, when a finger slides from point A to B, the cursor moves commonly, but when the finger stops sliding at point B, the cursor will go on moving by inertia towards the edge of the display device(s) until it gets to the edge of the display device(s). And before or when the cursor gets to the edge of the display device, if the finger change the slide direction, for example, from point B to D or B to C along the edge of the touchpad, the cursor restore moving commonly. And when the finger stops again at point C after sliding from B to C, the cursor start to move by inertia again. And when the finger slides from point C to E or C to F, the cursor restore moving commonly again. In addition, we can zoom the objectives out and in on a display device(s) by pinching in and out on the touchpad, and rotate the objectives by circling with a finger clockwise and counter-clockwise on the touchpad. A handheld keyboard can replace a PC keyboard to be used in a lot of occasions such as controlling a PC, smart TV, TV box and so on remotely.

When a handheld keyboard is held by a single hand, we can redefine and reuse the keys of the main keyboard according to the requirement of the controlled device, an example is shown as layout **19-3** in fig.**4**. The keys in layout **19-3** is the universal control keys of the remotes of the common home multimedia devices such as TV, projector, set-top box and multimedia player etc. Wherein the Source key is used not only to control the signal source of the display device such as a TV etc., but also synchronously to change the signal source device which are controlled by the handheld keyboard currently. In this way, one handheld keyboard can control a plurality of multimedia devices simultaneously, and each multimedia device need not be equipped with both one keyboard and one remote. The method is that, when changing the signal resource of a display device by a handheld keyboard, the controlled multimedia device related to this signal source sends a pairing request actively, and if the device have paired with the handheld keyboard successfully before, the request is ignored, and if not, a dialog box should be popped up to let the user to complete pairing between the handheld keyboard and the controlled media device, and at the same time the signal resource are associated with the controlled multimedia device automatically. Therefore when the signal resource changes, the handheld keyboard can always control the right multimedia device. A menu item should be added into the signal resource menu of the display device, which is used to control the display device like a TV etc. itself. The Source key always sends control codes to the display device. When the display device is in standby mode or turned off, the handheld keyboard is disabled, but when the display device is in standby mode, the Power key, which is used to control the display device currently, is not disabled. The fast forward and backward keys as shown in **19-3** of fig.**4** cooperate with a menu to be able to accelerate playing and rewinding, or are used to slide the indicator on a play progress bar. The functions of F1,F2,F3,F4 and F5 are defined and explained by the controlled devices, for example, switching between TV and broadcast signals(a satellite TV set-top box), or switching between TV and teletext signals (a cable TV set-top box) and so on.

When a handheld keyboard is held by a single hand and used as a remote, if the Switch key on the touch pad is clicked/touched, the keyboard changes to be a normal keyboard to allow the user to input characters, and if clicked/touched again, the keyboard changes to be a remote again accordingly. However when the keyboard is held by a single hand, the side-keys cannot be used, so only one of English and Chinese (or another language) can be inputted. In order to resolve this problem, the main keyboard employs a one-hand keyboard layout as **22** in fig.**5** at the same time when the side-keys are configured. In the same way, when a handheld keyboard is held by two hands and used as a normal keyboard, if the Switch key is clicked/touched, it changes to be a remote, and if clicked/touched again, it restores to be a normal keyboard accordingly. The holding distinction between by one hand and by two hands is determined by whether the side-keys are held correctly or not, this has been described in the section: Avoiding mis-operation of side-keys, so it is not repeated here anymore. When held by one hand, the default layout of the main keyboard is a remote layout, and when held by two hands, the default layout is a normal keyboard layout. Of course, even though a handheld keyboard is held by two hands, if the side-keys are not held correctly and enabled, it is yet used as a remote. Such a handheld keyboard which main keyboard is reused, can also be used to control industrial devices, and the other home and office devices which receive remote controls. Of course, the functions of the remote keys should be defined correspondingly according to the actual requirement and the specific application occasion. If a handheld keyboard which has a hard keyboard with the remote function, should employ standard layout **75-1** in fig.**12**, and had better employ one-hand keyboard layout **22** in fig.**5**. In this way, we can switch easily between keyboard and remote functions no matter whether a handheld keyboard is held by one hand or by two hands. When a double-face handheld keyboard is used as a remote and operated by a single hand, whether the keyboard or the touch pad is operated by the user currently can be determined according to the keyboard attitude sensor(s), and the corresponding operation face is enabled or disabled accordingly.
(I)A handheld digital device is used as a handheld keyboard. A handheld digital device employing the solution can be transformed to be a handheld keyboard with the aid of soft and hard wares. On the basis of the keyboard of a handheld digital device, all or a part of the touch screen of the handheld digital device is used as the touch pad of a handheld keyboard, and then connect the handheld digital device to the devices receiving the inputs of the handheld digital device by a cable or wirelessly, a convenient and user-friendly handheld keyboard is there. A slide phone is the best one to be used as a handheld keyboard. When a handheld digital device is used as a remote and operated by a single hand, it should map layout **19-3** in fig.**4**. A handheld digital device should reserve keyboard and remote transforming function for the user to use easily. If a handheld digital device does not reserve the function, it should be allowed to realize the function by setting up a special software/software package or upgrading the OS. In the same way, if a controlled device has not the function receiving the controls and inputs from a handheld digital device, it should be allowed to realize the function by installing a corresponding software/software package or upgrading the OS, and even adding a proper hardware such as a Bluetooth device etc.
(J)Cellular phone keyboard cases. In order to let the user of a soft keyboard bar phone to make use of the benefits of a hard keyboard, two cellular phone keyboard cases are given in fig.**13****.** And **82** and **84** respectively are a slide cellular phone keyboard case and a flip cellular phone keyboard case with a rotatable jacket. The electrical connection between a cellular phone and a keyboard case can be realized by either a wireless connection such as the Bluetooth technology or a wired connection such as the micro USB port of the cellular phone. If connected by micro USB, the micro USB connector of the keyboard case can be either a soft cable connector or a fixed hard connector as **85**. The micro USB connector extends out to form a micro USB port at the bottom or the side of the case as **86**, which is used to charge the phone and exchange data with the other digital devices. The micro USB cable is hidden under micro USB cable shield plate **83**. The micro USB port of the case can be configured with a mechanism which disables the keyboard of the case when an external micro USB connector is inserted into the port. Of course, we do not have to do so too, and let the keyboard of the case and the external device(s) share the same micro USB port of the cellular phone at the same time. When the micro USB port of a cellular phone is not at the bottom but at the other sides, the location of the hard micro USB connector **85** or a soft cable one should be changed correspondingly. If we remove the rotatable jacket from a flip cellular phone keyboard case with a rotatable jacket, it will become a flip cellular phone keyboard case. A slide cellular phone keyboard case is preferred. In the case of a soft keyboard bar phone which do not employ the solution, if it cannot be compatible with the solution by upgrading the OS and the input method, the sending logic of the scan codes of the keys of the main keyboard and the side-keys of the keyboard case should be modified to be in agreement with the PS2 protocol.
(K)Frameless tablet. If a pinch point is configured as **74-4** in fig.**11**, the frame of a tablet can be narrowed to be a minimum protecting frame as **74-5**, this not only eliminates the redundant frame, but also provides convenience to the user to find a proper holding position. Pinch point **74-4** is a dead point on the touch screen, the touch actions at the point are blocked when the point is pinched by the thumb in cooperation with the palm to hold the tablet. When the pinch point is pinched by the thumb, it moves following the sliding of the thumb, this can let the user to adjust the holding position easily or to expose the pinch area to operate or browse. The illustrated location of the pinch point is the initial one when the tablet is lighted. Mis-touch prevention blind zone **74-7** is configured to prevent the bulge of the root of the thumb from touching on the touch screen by mistake to cause wrong operations, which always locates at the edge of the touch screen near the pinch point, and hop-moves along edges following the moving of the pinch point. When the pinch point crosses 45-degree shift line **74-8** of the mis-touch prevention blind zone, the mis-touch prevention blind zone jumps and attaches to another edge next to the last edge. The dashed lines of mis-touch prevention blind zone **74-7** and 45 degree shift line **74-8** are only for illustration and don't exist actually on the touch screen. The mis-touch prevention blind zone is enabled to prevent from touching by mistake only when the pinch point is pinched. The touch operations at the pinch point is generally blocked, but the thumb at the pinch point can cooperate to simulate the left, right and middle mouse buttons (please refer to **73-2** and **74-3** in fig.**11**) when the user interface is a simulated mouse one. The pinch point does not move when the pinching thumb simulates a middle mouse button to scroll the screen. The pinch point and the mis-touch prevention blind zone can also be configured on the touch screen of a tablet with a wide frame only for holding more easily. A click at the pinch point can be used to show or hide a task bar or/and a start menu, and double clicks can be used as a Home button when the simulated mouse cursor hides. The icon of the pinch point should be hidden when the pinch point has not been used for a long time, and shown when a touch action happens anywhere on the touch screen again.
(L) PS2 protocol extensions. It is difficult for the solution which is used as an independent human interface solution to be compatible with the PS2 protocol completely, particularly when used with a handheld keyboard. The main keyboard of the solution uses 30 keys totally, they are the keys of 26 English letters, spacebar, enter, backspace and single quotation mark. And the side-keys use 3 keys: Ctrl, Shift and Alt. All the above keys are the ones of a PC keyboard. Meanwhile, 3 new control keys: Fvrt, Eng and Num are defined. In addition, 3 new keys: Switch, Page Left and Page Right are also added on the touch pad of a handheld keyboard. These 6 new keys (key zones) are not supported by PS2 protocol, so the protocol needs to be extended. ①Extension of scan codes. The first-set keyboard scan code of Fvrt is defined as E0,46 (make code) and E0,C6(break code); the second-set keyboard scan code of Fvrt is defined as E0,7E (make code) and E0,F0,7E(break code). the first-set one of Eng is defined as E0,3A and E0,BA; the second-set one of Eng is defined as E0,58 and E0,F0,58. the first-set one of Num is defined as E0,36 and E0,B6; the second-set one of Num is defined as E0,59 and E0,F0,59. the first-set one of Switch is defined as E0,0E and E0,8E; the second-set one of Switch is defined as E0,66 and E0,F0,66. the first-set one of Page Left is defined as E0,01 and E0,81; and the second-set one of Page Left is defined as E0,76 and E0,F0,76. the first-set one of Page Right is defined as E0,39 and E0,B9; the second-set one of Page Right is defined as E0,29 and E0,F0,29. ②Sending logic of scan codes. The sending logic of the scan codes of the 30 keys of the main keyboard is the same as a PC keyboard's. A make code is sent when a key is pressed, and a break code is sent when a key is released. The sending logic of the scan codes of the side-keys differs a little according to their press methods, but the basic principles are the same. Here we take only the first press method (please refer to the section: Press methods of side-keys) as an example to describe the sending logic of the scan code of the side-keys as below. (a) Ctrl and Alt. When Ctrl is pressed, the make code of Ctrl is sent, meanwhile the break codes of Fvrt, Eng, Num and Shift are sent if their make codes have been sent before (otherwise the break codes need not be sent, the same as below). The break code of Ctrl is sent when Ctrl is released. The sending logic of Alt is the same as Ctrl. (b) When Shift is pressed, the break code is sent if the make code was sent last time, otherwise the make code is sent. (c) Fvrt, Eng and Eum. When Fvrt is pressed, the make code of Fvrt is sent, meanwhile the break codes of Eng, Num and Shift are sent if their make codes have been sent before and the last pressed key is one of the keys of the main keyboard, otherwise their break codes need not be sent in order to make composite keys. The sending logic of Eng, Num is the same as Fvrt. When the Switch key (key zone) on the touch pad of a handheld keyboard is clicked/touched, the make code is sent if the break code was sent last time, otherwise the break code is sent. When Switch is released, any scan code is not sent. ③Simulating logic of mouse buttons. When the simulated mouse is enabled by a finger touching on the touch screen with a simulated mouse interface, Num, Eng and Fvrt are reused as the left, right and middle mouse button respectively. When Num or Eng is pressed, the relevant press button message is sent, when the finger or touch pen simulating the mouse leaves the touch screen afterward, the relevant release button message is sent. When Fvrt is pressed for the first time, the press middle button message is sent, and when Fvrt is pressed again, the release middle button message is sent. And the middle button messages circulate like this. When the mouse buttons are simulated by fingers, the sending logic of the left and right mouse button messages are the same as the above, but the press and release middle button messages are sent synchronously at the beginning and end of scrolling screen by fingers which simulate the middle mouse button. In addition, a new device ID 0XCC, 0XCC may be defined for the keyboard of the solution in order to distinguish from the current keyboard ID 0XAB, 0x83 of the PS2 protocol. Of course, the current keyboard ID may also continue to be used.

Conclusion: The solution has 2 standard hard keyboard layouts as **75-1** in fig.**12** and **24-2** in fig.**5**. The standard soft keyboard layouts comprise a English a-z layout **13** in fig.**3** corresponding to the side key Eng, a English A-Z layout **14** in fig.**3** corresponding to the side-keys Eng+Shift, a number and English punctuation layout **19-1** in fig.**4** corresponding to the side key Num, a English punctuation layout as **19-2** in fig.**4** corresponding to the side-keys Num+ Shift. The standard remote layout is shown as **19-3** in fig.**4**. The standard side-key layout is shown as **25** in fig.**6** which includes 6 side-keys: Ctrl, Fvrt, Shift, Num, Eng, and Alt, wherein Fvrt is used to input a user's mother tongue or an English user's favorite second language. The standard finger simulating a mouse is fore-finger or mid-finger, the fingers clicking/touching on the screen at the left and right of the simulating finger are used as the left and right simulated mouse buttons respectively, and the two fingers sliding side by side on the screen are used as the middle simulated mouse button. The middle simulated mouse button can also be simulated by one finger sliding together with another finger touching and staying on the screen. At the same time, the side-keys: Num, Eng and Fvrt can be redefined and reused as the left, right and middle simulated mouse button too. If a handheld digital device has a touch pen and the touch pen is used as a simulated mouse, there will be 3 parallel simulated mouse solutions. The standard one-hand keyboard layout is shown as **22** in fig.**5**. A cellular phone should reserve a keyboard and remote transforming function. The best embodiment of a cellular phone is a slide phone shown as **11** in fig.**2**. The best embodiment of a tablet is a transparent flip hard keyboard tablet shown as **55-1** in fig.**10-1**. A handheld keyboard had better be realized by transforming a cellular phone to a keyboard.

## Claims

1. A keyboard and mouse of a cellular phone, comprising a keyboard and a mouse, wherein the keyboard comprises a plurality of keyboard control keys and a main keyboard, and the mouse is simulated by a finger or a touch pen.

2. A cellular phone keyboard, according to the keyboard and mouse of a cellular phone of claim 1, wherein the keyboard control keys which are used to map a plurality of control keys of a PC keyboard and a plurality of new additional control keys and operated by one hand, can be located at the side(s), top side, back etc. of a handheld digital device or also at the side(s) of the main keyboard; the main keyboard is at the front surface of the handheld digital device or placed at the front surface of the handheld digital device when used and operated by another hand, which comprises a key matrix used to map the letter and number keys etc. of a PC keyboard; the main keyboard can be either a soft touch screen keyboard, or a common hard keyboard, or even a combination of a transparent hard keyboard and a soft touch screen keyboard; the keyboard control keys can be either physical hard keys, or touch-control soft keys, or even of a touch pad on which the keyboard control key locations are not predetermined.

3. A simulated mouse, according to the keyboard and mouse of a cellular phone of claim 1, wherein the mouse is simulated by a finger/touch pen on a touch screen/pad; the left and right mouse buttons are simulated respectively by fingers touching and clicking on the touch screen/pad at the left and right of the finger/touch pen simulating the mouse; the middle mouse button is simulated by two fingers sliding on the touch screen/pad side by side, or by one finger touching and staying together with another finger sliding on the touch screen/pad; in addition, the mouse buttons can also be simulated by reusing three of the keyboard control keys as the left, right and middle mouse buttons; the mouse cursor should be located in a visible zone outside the simulating finger and keep a constant distance from the simulating finger when simulating a mouse by a finger touching on a touch screen; in the case of a double interface application, an interface toggle button can be configured at a proper location on a touch screen for the user to toggle between a simulated mouse interface and a touch-control interface dynamically.

4. A one-hand keyboard, according to the cellular phone keyboard of claim 2, wherein the keyboard control keys are incorporated into the main keyboard.

5. A hard keyboard tablet, according to the keyboard and mouse of a cellular phone of claim 1, wherein the hard keyboard of a tablet can be either a common hard keyboard or a transparent hard keyboard, which is connected to the tablet by a plurality of connection ribbons, slide rails and slide rods etc., and drawn out or flipped onto the front surface of the tablet when used, and received into a keyboard room in the back of the tablet when not used; and a part(s) such as rotatable axis/axes, support and support rod etc. can also be configured with the hard keyboard to make the hard keyboard to be used as a support of the tablet.

6. A handheld keyboard, according to the keyboard and mouse of a cellular phone of claim 1, wherein a handheld keyboard comprises a hard keyboard and a touch pad/screen, the touch screen can be used as a mouse touch pad, or a keyboard, or a GUI, or to show information; the hard keyboard can be a common keyboard or a transparent hard keyboard; the hard keyboard and the touch pad/screen can be either on the same side or on the front and back sides respectively; the function of the hard keyboard can be redefined to be extended when the hard keyboard is held by a single hand.

7. A universal remote, according to the handheld keyboard of claim 6, wherein the handheld keyboard is used as a remote; and a plurality of devices which are controlled by the handheld keyboard are related with a signal resource menu of a display device; and the current device controlled remotely by the handheld keyboard changes at the same time when the current signal resource of the display device is changed by the handheld keyboard; in this way we can remotely control a plurality of devices at the same time only by one handheld keyboard.

8. A enhanced touchpad, according to the handheld keyboard of claim 6, wherein the touch pad or the touch screen used as a touch pad is divided into a plurality of key zones which have different functions when touched; the objects on a display device controlled by the handheld keyboard can be zoomed out and in by pinching in and out of two fingers touching on the touch pad or the touch screen used as a touch pad, and the objects can also be rotated by circling a finger clockwise and anticlockwise on the touch pad or touch screen; an inertial control method of mouse cursor is added: when a finger or the other touch-control device such as a touch pen stops sliding at an edge of the touch pad or the touch screen used as a touchpad, the cursor will go on moving by inertia on a display device until the touch action on the touch pad or the touch screen used as a touch pad changes, or the cursor reaches an edge of the display device.

9. A handheld digital device is used as a handheld keyboard, according to the handheld keyboard of claim 6, wherein a handheld keyboard is realized by a handheld digital device

10. A handheld keyboard controlled device, according to the handheld keyboard of claim 6, a handheld keyboard controlled device comprises a specific function portion and a portion controlled by the handheld keyboard, the latter comprises a electrical connection port/a wireless signal transceiver which receives the signals from the handheld keyboard, and an OS and/or an application software which processes the signals received from the handheld keyboard.
